# EUROPEAN PATENT SPECIFICATION

(11) **EP 1 149 624 B1**
(45) Date of publication and mention of the grant of the patent: **16.06.2004**
(21) Application number: 00303489.9
(22) Date of filing: 26.04.2000
(51) Int. Cl.: B01D 71/68, B01D 69/02, B01D 67/00

(54) **Highly asymmetric anionic membranes**
Hochgradig asymmetrische anionische Membranen
Membranes anioniques hautement asymmetriques

(43) Date of publication of application: 31.10.2001
(73) Proprietor: Pall Corporation, East Hills, New York 11548 (US)
(72) Inventor: Wang, I-fan, San Diego, California 92128 (US)
(74) Representative: Eyles, Christopher Thomas

(56) References cited:
- US-A- 4 604 208
- US-A- 4 888 115
- US-A- 4 915 839
- US-A- 5 531 893

## Description

### 1. Field of the Invention

The present invention relates to membranes having internal anionic charges and processes to prepare such membranes. The anionically charged membranes are produced from membrane casting processes incorporating anionic components.

### 2. Background of the Technology

Anionically charge-modified membranes are useful in the removal of a variety of materials from solutions and also in certain biotechnological applications. For example, negatively charged membranes are useful in the removal of endotoxins from solutions. Endotoxins are toxic substances often derived from bacterial lysates. In addition, such membranes have found utility in the removal of positively charged species from feed-streams, such as in the preparation of ultrapure water for the semiconductor industry.

Ultrafiltration and microfiltration membranes utilized in industry, particularly in the food processing industry and in environmental applications, are typically hydrophobic membranes which may be surface-modified with a hydrophilic material to reduce fouling and to confer additional desirable properties to the membrane. Membranes may be isotropic or asymmetric (anisotropic) in their pore structure. Isotropic membranes have a uniform pore structure throughout the membrane. Asymmetric membranes do not have a uniform pore structure throughout the membrane. Asymmetric porous membranes are distinguished from isotropic, homogeneous membrane structures whose flow and retention properties are independent of flow direction. Asymmetric membranes are useful in microfiltration, ultrafiltration, and reverse osmosis processes.

Several different processes and reagents have been utilized to produce charge-modified, initially hydrophilic or hydrophobic membranes, and related membranes.

U.S. Patent No. 4,604,208 to Chu, et al., and U.S. Patent No. 4,888,115 to Marinaccio, et al., disclose hydrophilic nylon membranes. The nylon membranes are rendered hydrophilic by applying an anionic charge modifying agent to the nylon membrane, for example, by dipping the nylon membrane in an aqueous solution containing an anionic charge modifying agent.

U.S. Patent No. 4,012,324 to Gregor discloses casting formulations including a matrix polymer, a polyelectrolyte, a solvent, and a chemical cross-linking agent. Membranes are formed therefrom through a process of evaporating the solvent to form a membrane of uniform porosity and macroscopic homogeneity, having fixed anionic or cationic charges and a water content of from about 15 to about 75%. Membranes with substantial equilibrium water content are known as hydrogels and are subject to loss of water unless protected prior to use and additionally have limited application.

U.S. Patent No. 4,673,504 to Ostreicher, et al., discloses cationic charge-modified microporous membranes that are produced from hydrophilic organic polymeric microporous membranes. These microporous membranes are hydrophilic and isotropic, with uniform pore structure throughout the membrane. However, anisotropic hydrophilic membranes are not disclosed in the Ostreicher patent.

U.S. Patent No. 4,797,187 to Davis, et al., discloses a method to prepare ionically bonded coacervate layer membranes having improved selectivity. The Davis membranes are composite semi-permeable membranes of the type useful for reverse osmosis, gas separation, and ultrafiltration, and are post-treated to improve their selectivity.

U.S. Patent No. 5,531,893 to Hu, et al., discloses a hydrophilic charge-modified microporous membrane having a crosslinked structure of an interpenetrating polymer network. The membrane comprises a homogeneous matrix of polyethersulfone (PES), polyfunctional glycidyl ether, and a polymeric amine such as polyethyleneimine (PEI) and like polyamines, and polyethylene glycol. A shortcoming of the '893 patent is that membranes heated for the stabilization of the network structure have a lower cationic charge density. This is stated to be due to gradual decomposition of crosslinked PEI adduct in the membrane structure.

Thus, while it can be seen that various different processes and reagents have been utilized to produce charge-modified membranes, each of the cited references has one or more undesirable features. None of the cited references produces stable, anionically charge-modified, isotropic or anisotropic, optionally non-hydrogel membranes in a simple casting process without chemical crosslinking agents. Accordingly, there remains a need for improved, stable, anionically charged membranes which possess a plurality of fixed formal negative charges that can be readily produced from polymer starting materials in a casting process without complication or expensive apparatus and which are not restricted to isotropic or hydrogel membrane types.

### SUMMARY OF THE INVENTION

The present invention provides a sulfone polymer membrane having permanent internal anionic charges, cast from a solution or suspension including a sulfone polymer, an anionic charge-modifying agent, a nonsolvent, and a solvent. The membrane has a first surface and a second surface, each surface having pores thereon; the membrane also has a porous supporting structure between the first and second surface; wherein the porous supporting structure includes a reticulated network of flow channels between the pores of the first surface and the second surface. The sulfone polymer may be, for example, polysulfone, polyethersulfone, or polyarylsulfone. The anionic charge-modifying agent may be 2-acrylamido-2-methylpropane sulfonic acid or 1-propanesulfonic acid 2-methyl-2-(1-oxy-2-propenyl amino). The nonsolvent may be, for example, low molecular weight organic acids, alcohols, ethers, surfactants, or water, including t-amyl alcohol, methoxyethanol, and propionic acid. The solvent may be N-methylpyrrolidone, and the casting solution or suspension may further include a cross-linking initiator.

The membrane of this aspect of the invention, may be an ultrafiltration membrane, and may have a molecular weight exclusion cutoff of about 10 kDa or about 100 kDa. Likewise, the membrane may be a microfilter, and may have a mean flow pore size of less than about 0.1 micron, about 0.2 micron, or about 0.3 to about 1.0 micron. The membrane may be asymmetric, and the pores of the first surface may be at least about 5 times smaller than the pores at the second surface. The flow channels of the porous supporting structure may gradually increase in diameter from the first surface to the second surface.

In another aspect, the invention provides a method of forming a sulfone polymer membrane having permanent internal anionic charges. The method includes: providing a casting solution or suspension including a sulfone polymer, an anionic charge-modifying agent, a nonsolvent, and a solvent; casting the solution or suspension to form a thin film; coagulating the film in a quench bath; and recovering a sulfone polymer membrane having permanent internal anionic charges, the membrane having a first surface and a second surface, each surface having pores thereon, the membrane also having a porous supporting structure between the first and second surface, wherein the porous supporting structure includes a reticulated network of flow channels between the pores of the first surface and the second surface. The sulfone polymer used in the method may be, for example, polysulfone, polyethersulfone, and polyarylsulfone. The anionic charge-modifying agent may be, for example, 2-acrylamido-2-methylpropane sulfonic acid or 1-propanesulfonic acid 2-methyl-2-(1-oxy-2-propenyl amino). The nonsolvent may include, for example, low molecular weight organic acids, alcohols, ethers, surfactants, or water, such as t-amyl alcohol, methoxyethanol, or propionic acid. The solvent may be N-methylpyrrolidone and the casting solution or suspension may further include a cross-linking initiator. The method of the invention may further include the additional step of heat crosslinking the membrane. The heat crosslinking step may occur at a temperature between 100°C and 130°C.

The method of the invention may be used to produce an ultrafiltration membrane, which may have a molecular weight exclusion cutoff of about 10 kDa, or about 100 kDa. The membrane may be a microfilter, and may have a mean flow pore size of less than about 0.1 micron, about 0.2 micron, or about 0.3 to about 1.0 micron. The membrane produced by the method may be asymmetric, and the pores of the first surface may be at least about 5 times smaller than the pores at the second surface. The flow channels of the porous supporting structure may gradually increase in diameter from first surface to the second surface.

### BRIEF DESCRIPTION OF THE FIGURES

Figure 1 is a scanning electron micrograph of a cross section of the ultrafiltration membrane of Example 3.
Figure 2 is a scanning electron micrograph of a cross section of the microfiltration membrane of Example 4.

### DETAILED DESCRIPTION OF THE INVENTION

The present invention relates to internally anionic sulfone polymer filtration membranes and their method of manufacture. In general, highly asymmetric, internally anionic sulfone polymer membranes may be produced by blending an anionically charged hydrophilic polymer or monomer with other polymeric membrane components to form a composition that is either a homogenous solution or a colloidal suspension. This composition then may be cast and phase separated into a solid form. Following the phase separation, the membrane may be heat crosslinked to form an irreversibly polymerized, internally anionic sulfone polymer membrane. These membranes have a highly asymmetric pore structure in cross section, and include a skin and a porous asymmetric support having a gradient of pore sizes. The term "skin" as used herein denotes a membrane surface having pores that are the smallest, or among the smallest, to be found in the membrane. This usage is in contrast to the conventional usage of the term "skin" in the art of gas separation type membranes, wherein the skin is often a nearly impermeable layer having no pores, or pores of vanishingly small size.

The membranes of the invention are internally hydrophilic, such that the negative charge is disposed on the internal faces of the pores. This contrasts with previous anionic membranes that are produced through post-casting treatments, such as sulfonation. Although post-casting sulfonation is known to convert an uncharged membrane into a charged membrane, it also suffers from several drawbacks. For example, the sulfonation process does not reliably produce charged membranes when the pore size is very small. In addition, post-casting sulfonation of a membrane reduces the life span of the membrane, leading to higher cost of membrane use.

The membranes of the invention are useful in a variety of applications in industrial waste treatment, oil waste water treatment, acid amine water, or filtration of metal ion feed streams, by either dead end or crossflow filtration. The present invention has a much higher water flow rate, excellent retention properties of various metal salts, and also has outstanding non-fouling characteristic due to the surface charges. These charged membranes have shown promising results in several areas such as selective recovery of solutes, industrial water reuse operations, metal plating rinse water recovery, hardness reduction, reuse of scrubber and mine water, processing of solutions containing high suspended solids, and the like.

In one embodiment of the invention, it has been discovered that sufficient irreversible anionic charge modification of a membrane produced by casting a polymer blend can be achieved without employing a chemically-induced crosslinking process. The avoidance of chemical crosslinking agents in the aforementioned membrane manufacturing process is desirable from the environmental perspective to reduce the use of hazardous materials and production of hazardous waste. Additionally, it is known that unreacted chemical crosslinking agents in a finished membrane can cause membrane performance problems. A simple thermal-induced crosslinking of the anionic charge-modifying polymer with itself and the other components of the polymer blend can be employed to produce an irreversibly anionically charged membrane. Such anionic membranes were found to exhibit highly efficient cationic dye retention.

Membranes of the present invention are useful in a variety of filtration applications, including the filtration of water and other fluids for electronics, pharmaceuticals, and biologics, as well as for endotoxin removal from secondary metabolite streams and blood filtration (including separation of leukocytes, lymphocytes, platelets, and the like).

Aspects of the invention provide an internally anionically charge-modified sulfone polymer membrane and a process to prepare such a membrane. Membranes can be prepared by casting a film with a mixed polymer solution or suspension containing a hydrophobic sulfone polymer, an anionic agent, a non-solvent and an organic solvent. The film is quenched in an aqueous bath after formation, and the resulting membrane is washed and dried. Conventional film casting, quenching, rinsing and drying procedures may be employed.

Sulfone polymer membranes of the invention may have an asymmetric or highly asymmetric cross sectional structure. A typical membrane having an asymmetric structure may have one surface with minimum (smallest or nearly smallest) pores, an opposite surface with larger pores, and a gradient of pores in the thickness between the surfaces, such that the pore size gradually increases from the skin face to the opposite face. In such a membrane, the asymmetry is quantified by comparing the diameter of the pores on the opposite face to the diameter of pores on the skin face. Asymmetric membranes may have a pore size ratio of about 2:1 to about 9:1. Highly asymmetric membranes may have pore size ratios of about 10:1, 100:1, 1,000:1, 10,000:1 or greater. In addition, still other membranes can have structures that combine asymmetric and isotropic regions. For example, a sulfone polymer membrane may be isotropic through part of its thickness, then gradually or abruptly asymmetric throughout the remained of its thickness. Both isotropic and asymmetric sulfone polymer membranes can be prepared to have a wide range of pore sizes and distributions. For example, the membranes can be prepared to be microfiltration membranes or ultrafiltration membranes.

Ultrafiltration membranes are typically categorized in terms of molecular weight exclusion cutoff values, which may be determined based on the efficiency of retention by the membrane of substances having a known molecular weight, such as, for example, polysaccharides or proteins. The ultrafilters of the invention may have molecular weight cutoff values of, for example, about 10 kDa or less, 30 kDa, 50 kDa, 100 kDa, or higher.

Microfiltration membranes may be categorized based on the size of the limiting pores of the membranes. Depending on the structure of the membranes, the limiting pores may be at one surface thereof, in which case they may be referred to as "skin" pores. Alternatively, the limiting pores may be within the membrane, either just beneath one surface or deeper in the internal membrane structure. When the limiting pores are not at the surface, it is difficult to visually measure their size using microscopy. In such cases, mean flow pore size may be determined by porometric tests as described herein. Accordingly, microfiltration membranes of the invention may have limiting pores or mean flow pore sizes of, for example, about 0.03 micron or less, 0.1 micron, 0.2 micron, 0.5 micron, 1.0 micron, 2.0 micron, and larger.

In a preferred embodiment, the hydrophobic sulfone polymer is selected from polysulfone, polyarylsulfone and polyethersulfone, with polyethersulfone being most preferred. Generally, a concentration between about 5% and about 50% by weight of the hydrophobic sulfone polymer may be employed in the membrane dope mix. Preferably, a concentration between about 8% and about 25% by weight is employed. Most preferably, a concentration of about 9-18% by weight of a sulfone polymer is employed.

The anionic agent can be any hydrophilic polymer or monomer containing a negative charge. For example, homopolymers of 2-acrylamido-2-methylpropane sulfonic acid, or 1-propanesulfonic acid 2-methyl-2-(1-oxy-2-propenyl amino) (AMPS) are preferred anionic agents. The concentration of the anionic agent may range from 0.1% to 10%, preferably from 0.2% to 6%, and more preferably from 0.4% to 4%.

The organic solvent used to produce the internally anionic membranes can be any solvent useful for dissolving the polymer. Preferred solvents are N-methylpyrrolidone (NMP) or dimethylformamide (DMF). Other suitable solvents include, but are not limited to, dimethylacetamide, dioxane, dimethylsulfoxide, chloroform, and tetrachloroethane propionic acid and tetrahydrofuran. Generally, a concentration between about 10% to 80% by weight of solvent may be employed in the polymer solution. Ranges of about 20% to 70% by weight, 30% to 60% by weight, and 40% to 50% by weight are particularly useful.

The non-solvent in the polymer mix is preferably one or more of: a low molecular weight organic acid, an alcohol, an ether, a surfactant, or water. Suitable examples of nonsolvents or pore formers include, but are not limited to, formic, acetic, propionic and butyric acid with propionic acid being most preferred, 2-methoxyethanol, t-amyl alcohol, 1-butanol, methanol, ethanol, isopropanol, hexanol, heptanol, octanol, acetone, methylethylketone, methylisobutylketone, butyl ether, ethyl acetate, amyl acetate, glycerol, diethyleneglycol, di(ethyleneglycol)diethylether, di(ethyleneglycol)dibutylether, surfactants such as TWEEN 20, 40, 60, 80, and water. Concentration of the non-solvent may range from about 10% or less to about 75% or more. In certain embodiments and formulations, a preferred concentration range is about 60% to 70%, while in other embodiments and formulations, a preferred concentration range is about 10% to 20%. In still other embodiments, the preferred concentration range is about 30% to 40%.

### EXAMPLES

The following examples are provided to illustrate the present invention. However, such examples are merely illustrative and are not intended to limit the subject matter of the invention. All chemical concentration percentages are w/v% unless otherwise indicated.

### EXAMPLE 1

A casting solution was prepared containing, by weight, 9.4% of polyethersulfone (Ultrasone E, 6020P available from BASF, Bridgeport, NJ), 0.4% of the homopolymer 2-acrylamido-2-methylpropane sulfonic acid, 1.4% water, 65% of methoxyethanol and 23.8% of N-methylpyrrollidone (NMP) as the solvent. Membrane samples were cast onto a moving belt of polyethylene-coated paper using a casting knife with a knife gap of 16 mils (425 µm). After casting, the membranes were exposed to air for less than one second and thereafter quenched in a 25°C water bath.

After coagulation in the water bath, the membranes were washed with deionized water and then air dried. The membranes thus formed were internally hydrophilic, as demonstrated by the complete wetting of the membranes within a few seconds of contact with water. The membranes were tested for water permeability and cationic dye retention at 6 psi (about 41.2 kPa) on a 25 mm diameter disk Amicon stirred cell (approximately 3.8 cm² effective filtering area). Membrane cross-sections showed asymmetric membrane structure. The membrane thus formed was found to retain more than 99.9% of a cationic methylene blue dye (10 ppm) from more than 20 mls of a filtered cationic dye solution.

### EXAMPLE 2

A casting solution is prepared as in Example 1, substituting polysulfone (Udel-3500, AMOCO, Alpharetta, GA), 1-propanesulfonic acid 2-methyl-2-(1-oxo-2-propenyl amino) (AMPS, LUBRIZOL Co., Wickliffe, OH), water, DMF, t-amyl alcohol and a cross-linking initiator (e.g. Na₂S₂O₈, Redox system) for the components used in the previous Example. Membrane samples are cast, air exposed, and quenched as in Example 1, except that the quench bath temperature is about 30°C.

After coagulation, the membranes are washed with deionized water and then heat crosslinked at 100°C to 130°C for 5 minutes. The membranes thus formed are found to be hydrophilic. Each membrane is tested for water permeability and cationic dye retention as in Example 1. The membrane has an asymmetric membrane structure. The membrane retains more than 99.9% of a 20 ml sample of 10 ppm methylene blue dye solution.

### EXAMPLE 3

Ultrafiltration membranes prepared from 16% polyethersulfone, 0.6% of a homopolymer of 2-acrylamido-2-methylpropane sulfonic acid in an aqueous solution containing 14% solid, 46.4% NMP, and 37% propionic acid were cast and air exposed as in Example 1, and then were quenched in a water bath at about 25°C or 40°C.

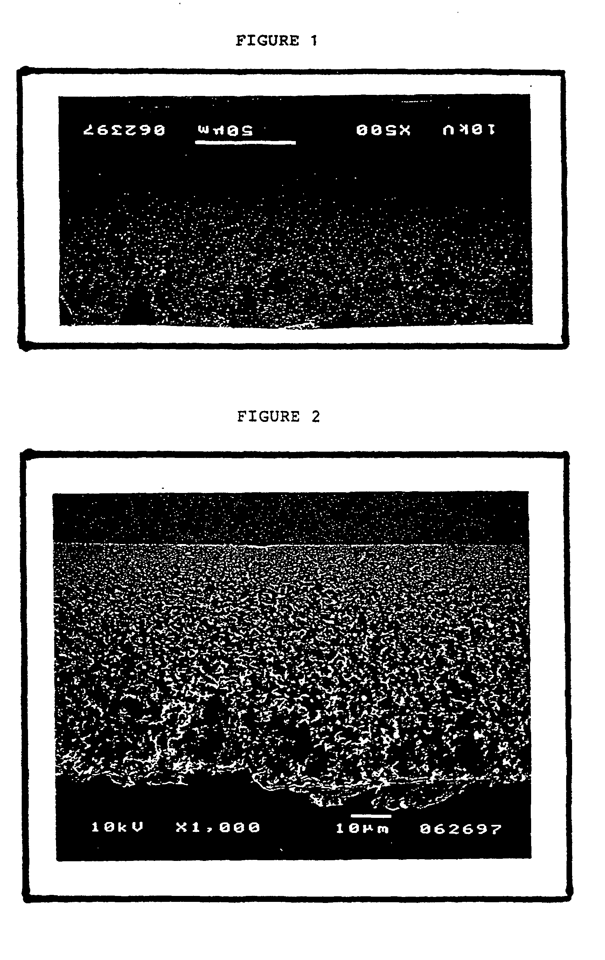

After coagulation, the membranes were washed with deionized water and then air dried. The membranes thus formed were hydrophilic. Each membrane was tested for water permeability and cationic dye retention at 10 psi (about 68.7 kPa). The membranes displayed an asymmetric structure, as shown in Figure 1. The membrane retained more than 99.9% of a 20 ml sample of 10 ppm methylene blue dye solution. Membranes that were quenched in a 25°C water bath had an immunoglobulin G (IgG, ∼160 kDa) retention of 98.9% and a bovine serum albumin (BSA, ∼ 67 kDa) retention of 94%. Membranes that were quenched in a 40°C water bath had an IgG retention of 96.2%.

### EXAMPLE 4

A microfiltration membrane was prepared from 11% polyethersulfone, 2% of the homopolymer 2-acrylamido-2-methylpropane sulfonic acid in an aqueous solution containing 14% solid, 71.6% DMF, and 15.4% t-amyl alcohol. The resulting solution was cast as in Example 1. Following casting, the membranes were exposed to air for three seconds and were quenched in a water bath at about 40°C.

After coagulation, the membranes were washed with deionized water and air dried. The membranes thus formed were hydrophilic. Each membrane was tested for water permeability and cationic dye retention at 10 psi (68.7 kPa). The membranes had an asymmetric structure, as shown in Figure 2. The membranes efficiently retained cationic dye from more than 20 ml of solution.

### EXAMPLE 5

A microfiltration membrane was prepared from 11% polyethersulfone, 4% of the homopolymer 2-acrylamido-2-methylpropane sulfonic acid (in an aqueous solution that contained 14% solid), 73% DMF, and 12% t-amyl alcohol and were cast, air exposed, and quenched as in Example 4.

After coagulation, the membranes were washed with deionized water and then air dried. The membranes thus formed were hydrophilic and had the same dye retention properties as Example 4.

### Effect of Polymer Concentration:

Of the membranes described in the Examples, those with relatively higher concentrations of the main polymer typically haye a smaller pore size. Although the concentrations of solvent and nonsolvent are not identical for the membranes of the Examples, a comparison of the described properties of the membranes supports the general principle that, other factors being held constant, a higher polymer concentration leads to a membrane with smaller pores.

### Effect of Quench Temperature:

The quench temperature can also have a significant effect on the morphology of the membrane. A comparison of the membranes produced in Example 3 is instructive. Both membranes were cast from dope mixes that had identical components and formulation ratios of polymer, nonsolvent, and solvent. The difference in the way these membranes were prepared is in the quench temperature, which was 25 °C for one (IgG retention efficiency 98.9) and 40°C for another (IgG retention efficiency 96.2). This comparison is consistent with the general rule that, other factors being held constant, a higher quench temperature results in more open pores, and often a larger MW cutoff value.

### EQUIVALENTS

While the invention has been described in connection with specific embodiments thereof, it will be understood that it is capable of further modification, and this application is intended to cover any variations, uses, or adaptations of the invention following, in general, the principles of the invention and including such departures from the present invention as would be understood to those in the art as equivalent and the scope and context of the present invention is to be interpreted as including such equivalents and construed in accordance with the claims appended hereto.

## Claims

1. A sulfone polymer membrane having permanent internal anionic charges, cast from a solution or suspension comprising a sulfone polymer, an anionic charge-modifying agent, a nonsolvent, and a solvent, the membrane having a first surface and a second surface, each surface having pores thereon, the membrane also having a porous supporting structure between the first and second surface, wherein the porous supporting structure comprises a reticulated network of flow channels between the pores of the first surface and the second surface.

2. The membrane of Claim 1, wherein the sulfone polymer is selected from the group consisting of polysulfone, polyethersulfone, and polyarylsulfone.

3. The membrane of Claim 1 wherein the sulfone polymer is polyethersulfone.

4. The membrane of Claim 1, wherein the anionic charge-modifying agent comprises 2-acrylamido-2-methylpropane sulfonic acid or 1-propanesulfonic acid 2-methyl-2-(1-oxy-2-propenyl amino).

5. The membrane of Claim 1, wherein the nonsolvent is selected from the group consisting of low molecular weight organic acids, alcohols, ethers, surfactants, and water.

6. The membrane of claim 1, wherein the nonsolvent is t-amyl alcohol, methoxyethanol, propionic acid, or water.

7. The membrane of Claim 1, wherein the solvent is N-methylpyrrolidone.

8. The membrane of Claim 1, wherein the casting solution or suspension further comprises a cross-linking initiator.

9. The membrane of Claim 1, wherein the membrane is an ultrafiltration membrane.

10. The membrane of Claim 9, having a molecular weight exclusion cutoff of about 10 kDa.

11. The membrane of Claim 9, having a molecular weight exclusion cutoff of about 100 kDa.

12. The membrane of Claim 1, wherein the membrane is a microfilter.

13. The membrane of Claim 12, having a mean flow pore size of less than about 0.1 micron.

14. The membrane of Claim 12, having a mean flow pore size of about 0.2 micron.

15. The membrane of Claim 12, having a mean flow pore size of about 0.3 to about 1.0 micron.

16. The membrane of Claim 1, wherein the membrane is asymmetric.

17. The membrane of Claim 16, wherein the pores of the first surface are at least about 5 times smaller than the pores at the second surface.

18. The membrane of Claim 16, wherein the flow channels of the porous supporting structure gradually increase in diameter from the first surface to the second surface.

19. A method of forming a sulfone polymer membrane having permanent internal anionic charges, the method comprising:
providing a casting solution or suspension comprising a sulfone polymer, an anionic charge-modifying agent, a nonsolvent, and a solvent;
casting the solution or suspension to form a thin film;
coagulating the film in a quench bath; and
recovering a sulfone polymer membrane having permanent internal anionic charges, the membrane having a first surface and a second surface, each surface having pores thereon, the membrane also having a porous supporting structure between the first and second surface, wherein the porous supporting structure comprises a reticulated network of flow channels between the pores of the first surface and the second surface.

20. The method of Claim 19, wherein the sulfone polymer is selected from the group consisting of polysulfone, polyethersulfone, and polyarylsulfone.

21. The method of Claim 19, wherein the sulfone polymer is polyethersulfone.

22. The method of Claim 19, wherein the anionic charge-modifying agent comprises 2-acrylamido-2-methylpropane sulfonic acid or 1-propanesulfonic acid 2-methyl-2-(1-oxy-2-propenyl amino).

23. The method of Claim 19, wherein the nonsolvent is selected from the group consisting of low molecular weight organic acids, alcohols, ethers, surfactants, and water.

24. The method of Claim 19, wherein the nonsolvent is t-amyl alcohol, methoxyethanol, propionic acid, or water.

25. The method of Claim 19, wherein the solvent is N-methylpyrrolidone.

26. The method of Claim 19, wherein the casting solution or suspension further comprises a cross-linking initiator.

27. The method of Claim 19, further comprising the additional step of heat crosslinking the membrane.

28. The method of Claim 27, wherein the heat crosslinking step occurs at a temperature between 100°C and 130°C.

29. The method of Claim 19, wherein the membrane is an ultrafiltration membrane.

30. The method of Claim 29, having a molecular weight exclusion cutoff of about 10 kDa.

31. The method of Claim 29, having a molecular weight exclusion cutoff of about 100 kDa.

32. The method of Claim 19, wherein the membrane is a microfilter.

33. The method of Claim 32, having a mean flow pore size of less than about 0.1 micron.

34. The method of Claim 32, having a mean flow pore size of about 0.2 micron.

35. The method of Claim 32, having a mean flow pore size of about 0.3 to about 1.0 micron.

36. The method of Claim 19, wherein the membrane is asymmetric.

37. The method of Claim 36, wherein the pores of the first surface are at least about 5 times smaller than the pores at the second surface.

38. The method of Claim 36, wherein the flow channels of the porous supporting structure gradually increase in diameter from the first surface to the second surface.

## Patentansprüche

1. Sulfonpolymer-Membran mit dauerhaften inneren Anionladungen, die aus einer ein Sulfonpolymer, ein Anionladung modifizierendes Mittel, ein Nichtlösungsmittel und ein Lösungsmittel enthaltenden Lösung oder Suspension gegossen wurde, wobei die Membran eine erste Oberfläche und eine zweite Oberfläche hat, auf jeder Oberfläche Poren vorhanden sind und die Membran zwischen der ersten und zweiten Oberfläche auch eine poröse Stützstruktur hat, die zwischen den Poren der ersten Oberfläche und der zweiten Oberfläche ein maschiges Netzwerk von Strömungskanälen aufweist.

2. Membran nach Anspruch 1, bei der das Sulfonpolymer aus der aus Polysulfon, Polyethersulfon und Polyarylsulfon bestehenden Gruppe ausgewählt ist.

3. Membran nach Anspruch 1, bei der das Sulfonpolymer Polyethersulfon ist.

4. Membran nach Anspruch 1, bei der das Anionladung modifizierende Mittel 2-Acrylamido-2-methylpropansulfonsäure oder 1-Propansulfonsäure-2-methyl-2-(1-oxy-2-propenylamino) umfaßt.

5. Membran nach Anspruch 1, bei der das Nichtlösungsmittel aus der aus niedermolekularen organischen Säuren, Alkoholen, Ethern, Tensiden und Wasser bestehenden Gruppe ausgewählt ist.

6. Membran nach Anspruch 1, bei der das Nichtlösungsmittel t-Amylalkohol, Methoxyethanol, Propionsäure oder Wasser ist.

7. Membran nach Anspruch 1, bei der das Lösungsmittel N-Methylpyrrolidon ist.

8. Membran nach Anspruch 1, bei der die Gießlösung oder -suspension ferner einen Vernetzungsinitiator enthält.

9. Membran nach Anspruch 1, bei der die Membran eine Ultrafiltrationsmembran ist.

10. Membran nach Anspruch 9 mit einer Molekulargewichtsausschlußgrenze von etwa 10 kDa.

11. Membran nach Anspruch 9 mit einer Molekulargewichtsausschlußgrenze von etwa 100 kDa.

12. Membran nach Anspruch 1, bei der die Membran ein Mikrofilter ist.

13. Membran nach Anspruch 12 mit einer mittleren Fließporengröße von weniger als etwa 0,1 Mikron.

14. Membran nach Anspruch 12 mit einer mittleren Fließporengröße von etwa 0,2 Mikron.

15. Membran nach Anspruch 12 mit einer mittleren Fließporengröße von etwa 0,3 bis etwa 1,0 Mikron.

16. Membran nach Anspruch 1, bei der die Membran asymmetrisch ist.

17. Membran nach Anspruch 16, bei der die Poren der ersten Oberfläche wenigstens etwa 5 mal kleiner als die Poren an der zweiten Oberfläche sind.

18. Membran nach Anspruch 16, bei der die Strömungskanäle der porösen Stützstruktur von der ersten Oberfläche zu der zweiten Oberfläche im Durchmesser allmählich zunehmen.

19. Verfahren zur Bildung einer Sulfonpolymer-Membran mit dauerhaften inneren Anionladungen, bei dem man
eine Gießlösung oder -suspension vorbereitet, die ein Sulfonpolymer, ein Anionladung modifizierendes Mittel, ein Nichtlösungsmittel und ein Lösungsmittel enthält,
die Lösung oder Suspension zur Bildung eines dünnen Films gießt,
den Film in einem Abschreckbad koaguliert, und
eine Sulfonpolymer-Membran mit dauerhaften inneren Anionladungen gewinnt, wobei die Membran eine erste Oberfläche und eine zweite Oberfläche hat, auf jeder Oberfläche Poren vorhanden sind und die Membran zwischen der ersten und zweiten Oberfläche auch eine poröse Stützstruktur hat, die zwischen den Poren der ersten Oberfläche und der zweiten Oberfläche ein maschiges Netzwerk von Strömungskanälen aufweist.

20. Verfahren nach Anspruch 19, bei dem das Sulfonpolymer aus der aus Polysulfon, Polyethersulfon und Polyarylsulfon bestehenden Gruppe ausgewählt ist.

21. Verfahren nach Anspruch 19, bei dem das Sulfonpolymer Polyethersulfon ist.

22. Verfahren nach Anspruch 19, bei dem das Anionladung modifizierende Mittel 2-Acrylamido-2-methylpropansulfonsäure oder 1-Propansulfonsäure-2-methyl-2-(1-oxy-2-propenylämino) umfaßt.

23. Verfahren nach Anspruch 19, bei dem das Nichtlösungsmittel aus der aus niedermolekularen organischen Säuren, Alkoholen, Ethern, Tensiden und Wasser bestehenden Gruppe ausgewählt ist.

24. Verfahren nach Anspruch 19, bei dem das Nichtlösungsmittel t-Amylalkohol, Methoxyethanol, Propionsäure oder Wasser ist.

25. Verfahren nach Anspruch 19, bei dem das Lösungsmittel N-Methylpyrrolidon ist.

26. Verfahren nach Anspruch 19, bei dem die Gießlösung oder - suspension ferner einen Vernetzungsinitiator enthält.

27. Verfahren nach Anspruch 19, ferner mit der zusätzlichen Stufe der Wärmevernetzung der Membran.

28. Verfahren nach Anspruch 27, bei dem die Wärmevernetzungsstufe bei einer Temperatur zwischen 100°C und 130°C erfolgt.

29. Verfahren nach Anspruch 19, bei dem die Membran eine Ultrafiltrationsmembran ist.

30. Verfahren nach Anspruch 29 mit einer Molekulargewichtsausschlußgrenze von etwa 10 kDa.

31. Verfahren nach Anspruch 29 mit einer Molekulargewichtsausschlußgrenze von etwa 100 kDa.

32. Verfahren nach Anspruch 19, bei der die Membran ein Mikrofilter ist.

33. Verfahren nach Anspruch 32 mit einer mittleren Fließporengröße von weniger als etwa 0,1 Mikron.

34. Verfahren nach Anspruch 32 mit einer mittleren Fließporengröße von etwa 0,2 Mikron.

35. Verfahren nach Anspruch 32 mit einer mittleren Fließporengröße von etwa 0,3 bis etwa 1,0 Mikron.

36. Verfahren nach Anspruch 19, bei dem die Membran asymmetrisch ist.

37. Verfahren nach Anspruch 36, bei dem die Poren der ersten Oberfläche wenigstens etwa 5 mal kleiner als die Poren der zweiten Oberfläche sind.

38. Verfahren nach Anspruch 36, bei dem die Strömungskanäle der porösen Stützstruktur von der ersten Oberfläche zu der zweiten Oberfläche im Durchmesser allmählich zunehmen.

## Revendications

1. Membrane de polymère de sulfone ayant des charges anioniques internes permanentes, coulée à partir d'une solution ou d'une suspension comprenant un polymère de sulfone, un agent de modification de charge anionique, un non-solvant et un solvant, la membrane présentant une première surface et une secondé surface, chaque surface ayant des pores sur son dessus, la membrane possédant également une structure de support poreuse entre les première et seconde surfaces, dans laquelle la structure de support poreuse comprend un réseau réticulé de canaux d'écoulement entre les pores de la première surface et de la seconde surface.

2. Membrane selon la revendication 1, dans laquelle le polymère de sulfone est choisi parmi la polysulfone, la polyéthersulfone et la polyarylsulfone.

3. Membrane selon la revendication 1, dans laquelle le polymère de sulfone est la polyéthersulfone.

4. Membrane selon la revendication 1, dans laquelle l'agent de modification de charge anionique comprend l'acide 2-acrylamido-2-méthylpropanesulfonique ou l'acide 1-propanesulfonique 2-méthyl-2-(1-oxy-2-propénylamino).

5. Membrane selon la revendication 1, dans laquelle le non-solvant est choisi parmi des acides organiques des alcools, des éthers, des tensioactifs de faible poids moléculaire et de l'eau.

6. Membrane selon la revendication 1, dans laquelle le non-solvant est l'alcool t-amylique, le méthoxyéthanol, l'acide propionique ou l'eau.

7. Membrane selon la revendication 1, dans laquelle le solvant est la N-méthylpyrrolidone

8. Membrane selon la revendication 1, dans laquelle la solution ou la suspension de coulée comprend en outre un initiateur de réticulation.

9. Membrane selon la revendication 1, dans laquelle la membrane est une membrane d'ultrafiltration.

10. Membrane selon la revendication 9 ayant une limite d'exclusion de poids moléculaire d'environ 10 kDa.

11. Membrane selon la revendication 9 ayant une limite d'exclusion de poids moléculaire d'environ 100 kDa.

12. Membrane selon la revendication 1, dans laquelle la membrane est un microfiltre.

13. Membrane selon la revendication 12 ayant une taille moyenne de pores d'écoulement inférieure à environ 0,1 µm.

14. Membrane selon la revendication 12 ayant une taille moyenne de pores d'écoulement d'environ 0,2 µm.

15. Membrane selon la revendication 12 ayant une taille moyenne de pores d'écoulement d'environ 0,3 à environ 1,0 µm.

16. Membrane selon la revendication 1, dans laquelle la membrane est asymétrique.

17. Membrane selon la revendication 16, dans laquelle les pores de la première surface sont au moins environ 5 fois plus petits que les pores sur la seconde surface.

18. Membrane selon la revendication 16, dans laquelle les canaux d'écoulement de la structure de support poreuse augmentent progressivement en diamètre de la première surface vers la seconde surface.

19. Procédé de formation d'une membrane de polymère de sulfone ayant des charges anioniques internes permanentes, le procédé comprenant les étapes consistant :
à fournir une solution ou une suspension de coulée comprenant un polymère de sulfone, un agent de modification de charge anionique, un non-solvant et un solvant ;
à couler la solution ou la suspension pour former un film mince ;
à faire coaguler le film dans un bain de trempe ; et
à récupérer une membrane de polymère de sulfone présentant des charges anioniques internes permanentes,
la membrane ayant une première surface et une seconde surface, chaque surface ayant des pores sur son dessus, la membrane possédant également une structure de support poreuse entre les première et seconde surfaces, dans laquelle la structure de support poreuse comprend un réseau réticulé de canaux d'écoulement entre les pores de la première surface et de la seconde surface.

20. Procédé selon la revendication 19, dans lequel le polymère de sulfone est choisi parmi la polysulfone, la polyéthersulfone et la polyarylsulfone.

21. Procédé selon la revendication 19, dans lequel le polymère de sulfone est la polyéthersulfone.

22. Procédé selon la revendication 19, dans lequel l'agent de modification de charge anionique comprend l'acide 2-acrylamido-2-méthylpropanesulfonique ou l'acide 1-propanesulfonique 2-méthyl-2-(1-oxy-2-propénylamino).

23. Procédé selon la revendication 19, dans lequel le non-solvant est choisi parmi des acides organiques, des alcools, des éthers, des tensioactifs de faible poids moléculaire et de l'eau.

24. Procédé selon la revendication 19, dans lequel le non-solvant est l'alcool t-amylique, le méthoxyéthanol, l'acide propionique ou l'eau.

25. Procédé selon la revendication 19, dans lequel le solvant est la N-méthylpyrrolidone.

26. Procédé selon la revendication 19, dans lequel la solution ou la suspension de coulée comprend en outre un initiateur de réticulation.

27. Procédé selon la revendication 19 comprenant en outre l'étape supplémentaire de réticulation par chauffage de la membrane.

28. Procédé selon la revendication 27, dans lequel l'étape de réticulation par chauffage a lieu à une température comprise entre 100°C et 130°C.

29. Procédé selon la revendication 19, dans lequel la membrane est une membrane d'ultrafiltration.

30. Procédé selon la revendication 29, ayant une limite d'exclusion de poids moléculaire d'environ 10 kDa.

31. Procédé selon la revendication 29 ayant une limite d'exclusion de poids moléculaire d'environ 100 kDa.

32. Procédé selon la revendication 19, dans lequel la membrane est un microfiltre.

33. Procédé selon la revendication 32 ayant une taille moyenne de pores d'écoulement inférieure à environ 0,1 micron

34. Procédé selon la revendication 32 ayant une taille moyenne de pores d'écoulement d'environ 0,2 micron.

35. Procédé selon la revendication 32 ayant une taille moyenne de pores d'écoulement d'environ 0,3 à environ 1,0 micron.

36. Procédé selon la revendication 19, dans lequel la membrane est asymétrique.

37. Procédé selon la revendication 36, dans lequel les pores de la première surface sont au moins environ 5 fois plus petits que les pores sur la seconde surface.

38. Procédé selon la revendication 36, dans lequel les canaux d'écoulement de la structure de support poreuse augmentent progressivement en diamètre à partir de la première surface vers la seconde surface.
